# EUROPEAN PATENT APPLICATION

(11) **EP 1 674 909 A1**
(43) Date of publication of application: **28.06.2006**
(21) Application number: 05258012.3
(22) Date of filing: 22.12.2005
(51) Int. Cl.: G02B 7/00, G02B 3/00

(54) **Compound lens assembling method, compound lens assembled by the same, and camera**

(30) Priority: 27.12.2004 JP 2004378000
(71) Applicant: SONY CORPORATION, Tokyo 141-0001 (JP)
(72) Inventor: Mori, Hiroyuki, Shinagawa-ku, Tokyo (JP)
(74) Representative: Nicholls, Michael John

(57) **Abstract**

Disclosed is a method of assembling plural single lenses of a compound lens such that optical axes of the single lenses are aligned with each other. The method includes: pressing the single lenses (71,72) disposed respectively on the opposite sides of a cylindrical spacer (73) against the spacer by a pair of chucking units (75,76) having center axes aligned with each other and capable of moving in directions parallel to the optical axes of the single lenses; and fixing the single lenses to the spacer by a fixing means (84) with the curved surfaces of the single lenses on the opposite sides of the spacer in contact with contact surfaces (81,82) of the chucking units and the spacer contained in planes perpendicular to the optical axis, respectively, and with the single lenses and the spacer automatically centered.

## Description

The present invention contains subject matter related to Japanese Patent Application 2004-378000 filed in the Japanese Patent Office on December 27, 2004, the entire contents of which being incorporated herein by reference.

The present invention relates to a compound lens assembling method, a compound lens assembled by the same compound lens assembling method, and a camera using the compound lens. More particularly, the present invention relates to a compound lens assembling method of assembling a_plurality of lenses with their optical axis aligned with each other, a compound lens assembled by the same compound lens assembling method, and a camera provided with a lens system including compound lenses assembled by the compound lens assembling method.

Improvements have been made in video cameras and digital still cameras for many themes including miniaturization, weight reduction, increasing zoom ratio, rapid focusing and rapid zooming. The lens system including moving lens groups for an optical instrument, such as a video camera or a digital still camera, is provided with a linear actuator or a linear motor for driving a coil combined with a movable zooming member having a zooming function or a movable focusing member having a focusing function by a magnetic circuit including a magnet and a yoke for linear movement.

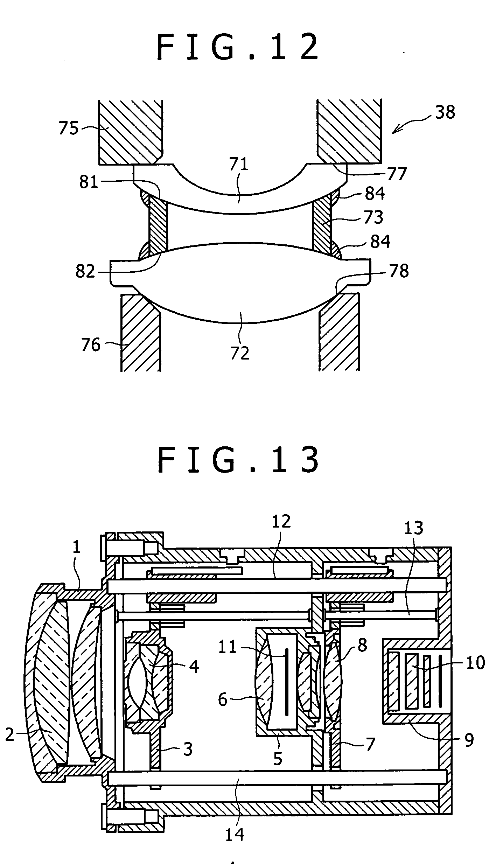

Fig. 13 shows a representative optical system including movable lenses for an optical instrument, such as a video camera or a digital still camera. Referring to Fig. 13, an objective lens 2 is fixedly mounted on a front lens barrel 1, a zoom lens 4 is attached to a movable zooming member 3 capable of moving along the optical axis of the optical system, a fixed middle lens 6 is fixed to a middle lens barrel 5, and a focusing lens 8 is attached to a movable focusing member 7 capable of moving along the optical axis. An image pickup device 10 including a CCD is attached to a back lens barrel 9. An iris 11, namely, an aperture stop, is placed in the fixed middle lens 6. The movable zooming member 3 and the movable focusing member 7 are guided for axial movement along the optical axis by upper guide bars 12 and 13 and a lower guide bar 14.

The movable zooming member 3 holding the zoom lens 4 is moved for zooming to determine an image frame. The movable focusingmember 7 holding the focusing lens 8 is moved for focusing according to the movement of the movable zooming member. The iris 11 adjusts optical aperture for proper exposure. An image of an object is formed on the surface of the image pickup device 10. The image pickup device 10 provides electric signals representing the intensities of light rays fallen thereon.

The performance of this optical system can be improved and aberrations can be corrected by using a compound lens formed by assembling a plurality of single lenses as the objective lens 2, the zoom lens 4, the fixed middle lens 6 or the focusing lens 8. In assembling a plurality of single lenses to form a compound lens, the tilt and shift of the single lenses or the compound lens need to be accurately corrected and the single lenses need to be correctly fixed to the lens barrel.

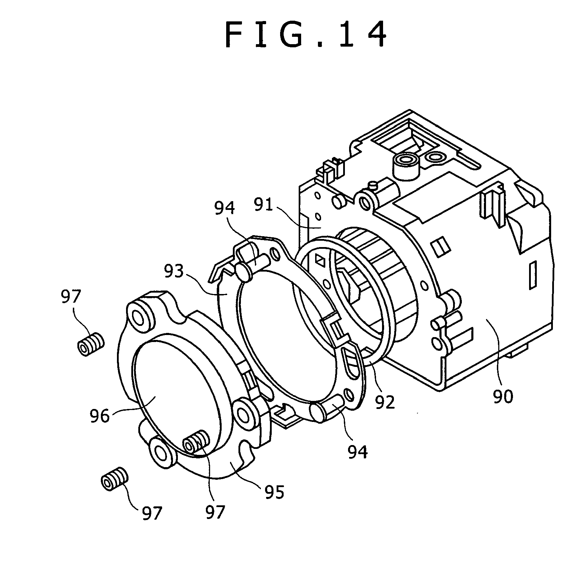

The alignment of a lens 96 is adjusted by an adjusting mechanism including a plate spring 93 as shown in Fig. 14. A reinforcing plate 91 is attached to the front side of a lens barrel 90, a ring 92 is seated on the front surface of the reinforcing plate 91. The plate spring 93 is fastened to the lens barrel 90 with screws 94 passed through the reinforcing plate 91 and screwed in threaded holes formed in the lens barrel 91. The ring 92 is held between the plate spring 93 and the reinforcing plate 91. The lens 96 is fixedly mounted on a lens holding frame 95. The position of.the lens holding frame 95 is adjusted by means of adjusting screws 97.

A structure holding the lens holding frame 95 by the plate spring 93 can correct only the tilt of the lens 96. Since the adjusting screws 97 are arranged around the lens 96 and the plate spring 93 surrounds the lens 96, the outside diameter of the lens barrel is large as compared with the diameter of the lens 96. Thus this structure obstructs the reduction of the radial dimension of the lens barrel.

A chart is displayed, and the tilt of the lens holding frame 95 is adjusted by means of the adjusting screw 97 and the plate spring 93 to adjust the optical axis of the lens 96 of this lens system. Since the adjusting screws 97 are on the side of the lens 96 and have axes parallel to the optical axis, an adjusting tool for turning the adjusting screws 97 is necessary. As obvious from Fig. 14, many parts are needed for adjustment and the adjusting mechanism is complex.

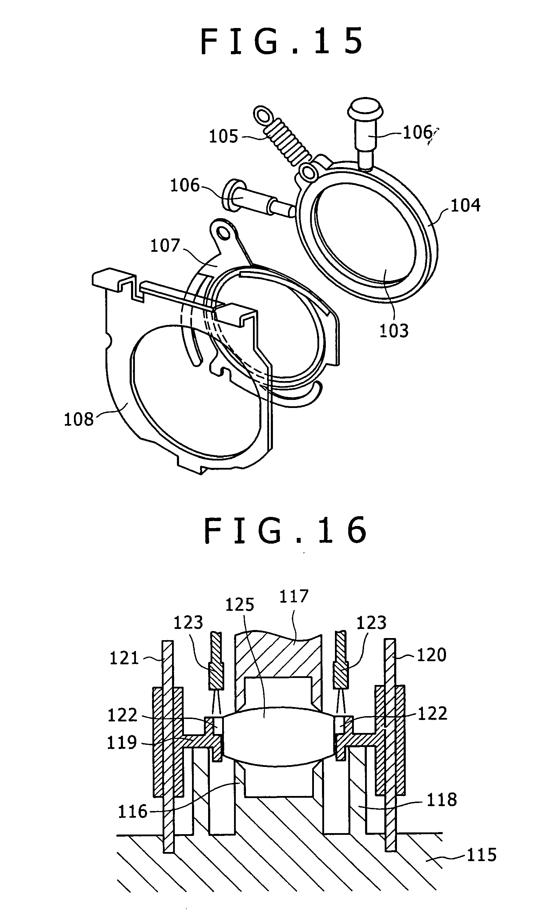

Fig. 15 shows another adjusting mechanism. A lens 103 is mounted on a lens holding frame 104. A tension coil spring 105 pulls the lens holding frame 104 in a radial direction. The lens holding frame 104 is moved for positioning against the resilience of the tension coil spring 105 to a predetermined position by adjusting screws 106. A thrust spring 107 is used for adjusting the position of the lens holding frame 104 with respect to a direction parallel to the optical axis. A pressure member 108 presses the thrust spring 107. Pressure applied by the pressure member 108 to the thrust spring 107 is adjusted to adjust the axial position of the lens 103 on the optical axis.

The adjusting mechanism shown in Fig. 15 preloads the lens holding frame 104 radially by the tension coil spring 105, presses the lens holding frame 104 axially by the thrust spring 107, and corrects only the position of the lens holding frame 105 with respect to a shifting direction in a plane perpendicular to the optical axis by means of the adjusting screws 106. Since the adjusting screws 106 and the thrust plate 107 are disposed outside the lens 103, the lens barrel is enlarged radially and axially relative to the lens 103 and it is difficult to form the lens barrel in small dimensions.

An image of a chart is projected through the lens system on a screen when the shift of the lens holding frame 104 is adjusted by this adjusting mechanism. Although work for operating the adjusting mechanism shown in Fig. 15 is easier than that for operating the adjusting mechanism shown in Fig. 14, an adjusting tool is needed to turn and move the adjusting screws 106 in directions perpendicular to the optical axis to adjust the shift of the lens holding frame 104. Thus the adjusting mechanism causes difficulties in assembling equipment. The adjusting mechanism needs a plurality of adjusting members and many component parts, which causes difficulties in assembling work.

Fig. 16 shows an adjusting mechanism for carrying out an adjusting method disclosed in JP-A No. 11-72768. This adjusting mechanism uses a bell chuck for optical axis alignment. A lower chucking unit 116 is fixedly mounted on a bell chuck base 115. An upper chucking unit 117 is vertically movable along an axis. A lens holding frame 119 is supported on a support member 118. Peripheral parts of the lens holding frame 119 is guided by two guide bars 120 and 121 for vertical movement. A lens held on the lens holding frame 119 is held between the lower bell chucking unit 116 and the upper bell chucking unit 117. After aligning the optical axis of the lens 125 with the center axis of the lens holding frame 119, a gap between the circumference of the lens 125 and the lens holding frame 119 filled up with an adhesive 122. Then, the adhesive 122 is irradiated with ultraviolet rays emitted by irradiating devices 123 to set the adhesive 122.

The adjusting mechanism shown in Fig. 16 holds the lens 125 fixedly by the lower bell chucking unit 116 and the upper bell chucking unit 117, holds the lens holding frame 119 by the guide bars 120 and 121, and bonds the lens 125 to the lens holding frame 119 with the adhesive 122. It is possible that the lens 125 cannot be accurately positioned relative to the lens holding frame 119 due to the insufficient accuracy of the parallelism of the chucking units 116 and 117 with the guide bars 120 and 121 supporting the lens holding frame 119, the insufficient positional accuracy of the chucking units 116 and 117 and the guide bars 120 and 121, and plays between the lens holding frame 119 and the guide bars 120 and 121.

The adjusting mechanism shown in Fig. 16 fixes the single lens 125 to the lens holding frame 119. However, the adjusting mechanism shown in Fig. 16 is unable to fix a plurality of lenses accurately to the lens holding frame with a spacer held between the adj acent lenses. A compound lens according to an embodiment of the present invention includes a plurality of lenses that can be fixed relative to each other with a spacer placed between the adjacent lenses and remarkably increases the degree of freedom of optical design for determining the distance between the surfaces of the adjacent lenses. The adjusting mechanism shown in Fig. 16 fastens the lens 125 to the lens holding frame 119 only with the adhesive 122 filling up the gap between the lens 125 and the lens holding frame 119. It is possible that lens holding strength and lens fixing accuracy deteriorate after the lens 125 has been bonded to the lens holding frame 119 with the adhesive 122,

An embodiment of the present invention is directed to a compound lens assembling method of assembling a compound lens including a plurality of single lenses, capable of positioning the single lenses with their optical axes highly accurately aligned with each other without requiring any optical axis aligning process.

Another embodiment of the present invention is directed to a compound lens assembling method of assembling a compound lens, capable of achieving an optical centering process for centering a plurality lenses without using any lens adjusting mechanism.

Another embodiment of the present invention is directed to a compound lens assembling method that enables the dimensional reduction of a lens barrel.

Another embodiment of the present invention is directed to a compound lens assembling method not requiring adjusting parts for optical axis alignment and capable of reduced assembling man-hours.

Another embodiment of the present invention is directed to a compound lens assembling method capable of reducing man-hours for optical axis alignment.

Another embodiment of the present invention is directed to a compound lens assembling method capable of highly accurately assembling a compound lens and including a compound lens assembling process needing simple tools and jigs to facilitate assembling work.

Another embodiment of the present invention is directed to a compound lens assembled by a compound lens assembling method according to the embodiment of the present invention.

Another embodiment of the present invention is directed to a lens system including compound lens assembled by a compound lens assembling method according to the embodiment of the present invention.

A compound lens assembling method of assembling a plurality of single lenses of a compound lens such that their optical axes are aligned with each other in the embodiment of the present invention includes the steps of: pressing the single lenses disposed respectively on the opposite sides of a cylindrical spacer against the spacer by a pair of chucking units having center axes aligned with each other and capable of moving in directions parallel to the optical axes of the single lenses; and fixing the single lenses to the spacer by a fixing means with the curved surfaces of the single lenses on the opposite sides of the spacer in contact with contact surfaces of the chucking units and the spacer contained in flat planes perpendicular to the optical axis, respectively, and with the single lenses and the spacer automatically centered.

At least one of the single lenses may be automatically centered relative to one of the chucking units with a curved surface thereof in contact with the contact surface of the corresponding chucking unit. At least one of the single lenses may be automatically centered relative to the spacer with a curved surface thereof in contact with a contact surface of the spacer. Contact parts of the single lenses in contact with the spacer may be contained in flat planes perpendicular to the optical axis, respectively. Contact surfaces of the single lenses in contact with the pair of chucking units may be contained in flat planes perpendicular to the optical axis, respectively. The fixing means may be adhesive bonding, staking, an annular holding spring or a fixing member of a heat shrinkable polymer. A compound lens in the embodiment of the present invention is assembled by the foregoing compound lens assembling method in the embodiment of the present invention.

The present invention concerning a compound lens relates to a compound lens assembled by any one of the above constitutions. The present invention concerning a lens system relates to a lens system using the compound lens.

In a lens system in a preferred embodiment of the present invention for an image pickup device, such as a video camera, the curved surfaces of a plurality of single lenses to be centered with each other are chucked with a cylindrical spacer placed between the adjacent single lenses from vertical directions by a chucking device, as a fixing means capable of fixing the single lenses in a highly accurate compound lens to a lens barrel without requiring optical axis aligning work, having centered first and second chucking surfaces capable of being moved parallel to the optical axes of the single lenses, the curved surfaces in contact with the spacers are fixed to the spacers by adhesive bonding, staking or clamping with annular holding springs, and in a compound lens holding method, a compound lens includes spacers and a chucking devices, each of the spacers or the chucking devices has flat contact surfaces perpendicular to the optical axis in contact with the single lenses, and the single lenses are fixed to the lens barrel by adhesive bonding, staking or clamping with annular holding springs.

According to an embodiment of the present invention, in the lens system included in an image pickup system of a video camera or the like, the single lenses are accurately combined in a compound lens without requiring optical axis aligning work, the fixing means for fixing the single lenses to the lens barrel does not need any lens adjusting mechanism incorporated into the barrel, which is very advantageous for the dimensional reduction of the lens barrel. Adjusting parts and man-hours for assembling and optical axis alignment can be reduced. The compound lens can be highly accurately assembled, tools and jigs to be used by a lens assembling process can be simplified and the compound lens can be easily assembled.

The compound lens assembling method of assembling the plurality of single lenses with the optical axes thereof aligned with each other according to the embodiment of the present invention presses the single lenses disposed respectively on the opposite sides of the cylindrical spacer against the spacer by the pair of chucking units having center axes aligned with each other and capable of moving in directions parallel to the optical axes of the single lenses, and fixes the single lenses by the fixing means with the curved surfaces of the single lenses on the opposite sides of the spacer in contact with flat contact surfaces perpendicular to the optical axis, respectively, of the chucking units or the spacer, and with the single lenses and the spacer automatically centered.

Thus, when the compound lens is assembled by the compound lens assembling method, the spacer and the single lenses on the opposite sides of the spacer are automatically centered when the compound lenses are pressed against to the opposite end surfaces of the cylindrical spacer by the chucking units, and the thus centered compound lenses and the spacers are fixed by the fixing means to complete the compound lens. Therefore, any special adjusting parts and assembling work for the optical axis adjustment of the lenses and spacers are unnecessary. Thus the compound lens assembling method of the present invention is very simple and capable of assembling the plurality of single lenses with their optical axes aligned with each other in high accuracy.

Embodiments of the present invention will now be described, by way of example only, with reference to the accompanying drawings, in which:
Fig. 1 is a perspective view of a lens system;
Fig. 2 is a perspective view of the lens system shown in Fig. 1 placed with its right side facing up;
Fig. 3 is a side elevation of the lens system shown in Fig. 1 with its case removed;
Fig. 4 is a perspective view of an essential part of the lens system shown in Fig. 1;
Fig. 5 is a front elevation of the essential part shown in Fig. 4 taken from the side of an objective lens;
Fig. 6 is a rear view of the essential part shown in Fig. 4 taken from the side of an image pickup device;
Fig. 7 is a block diagram of an image pickup system including the lens system shown in Fig. 1;
Fig. 8 is an exploded perspective view of a fixed middle lens unit;
Fig. 9 is sectional view of the fixed middle lens unit shown in Fig. 8;
Fig. 10 is a longitudinal sectional view of a fixed middle lens unit in a first modification;
Fig. 11 is a longitudinal sectional view of a fixed middle lens unit in a second modification;
Fig. 12 is a longitudinal sectional view of a fixed middle lens unit in a third modification;
Fig. 13 is a longitudinal sectional view of an essential part of a lens system of related art;
Fig. 14 is an exploded perspective view of an optical axis aligning mechanism included in the lens system shown in Fig. 13;
Fig. 15 is an exploded perspective view of another optical axis aligning mechanism; and
Fig. 16 is a longitudinal sectional view of an essential part of an optical axis aligning mechanism including bell chuck units.

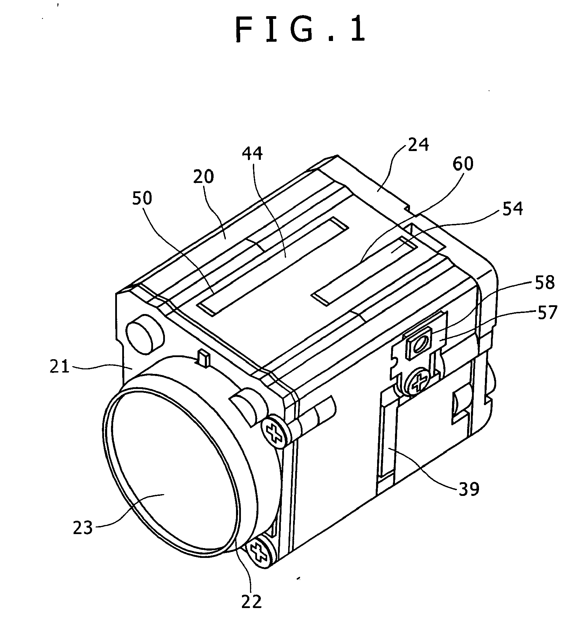

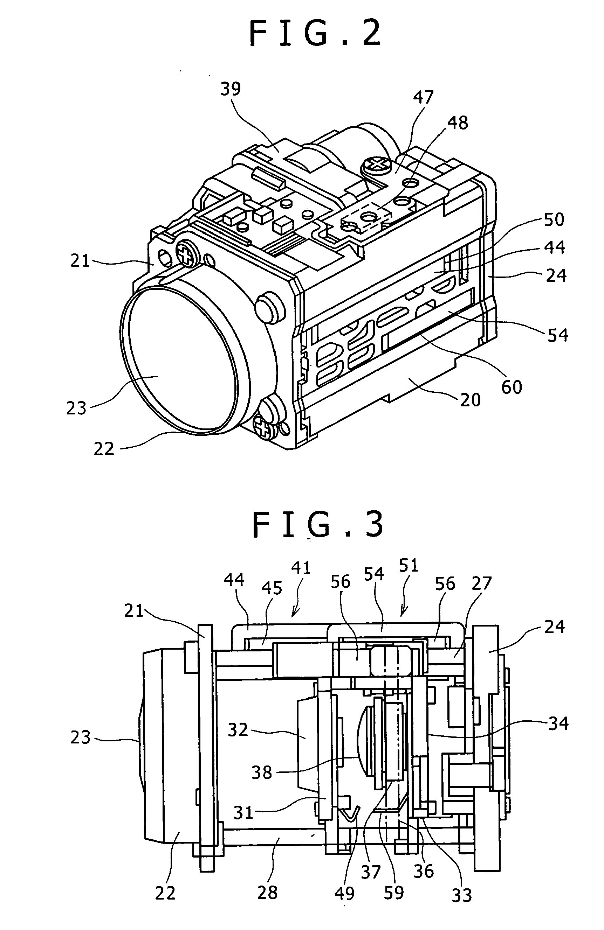

Preferred embodiment of the present invention will be described. Figs. 1 to 7 show a_lens system related with the present invention. Referring to Figs. 1 and 2, the lens system has a case 20 made of a synthetic resin having a shape substantially resembling a rectangular solid. The open front end of the case 20 is covered with a front plate 21. A front barrel 22 is formed integrally with the front plate 21 as best shown in Figs. 1 to 3. An objective lens 23 is fixedly held on the front barrel 22. The open back end of the case 20 is covered with a back plate 24.

A pair of upper guide bars 26 and 27 is extended in an upper part of the interior of the case 20. A lower guide bar 28 is extended in a lower part of the interior of the case 20. The upper guide bars 26 and 27 and the lower guide bar 28 have front and back ends supported on the front plate 21 and the back plate 24, respectively.

As shown in Figs. 3 to 5, a movable zooming member 31, namely, a lens frame, is guided for movement along the optical axis of the compound lens by the upper guide bar 26 and the lower guide bar 28. The movable zooming member 31 holds a lens 32. As shown in Figs. 3, 4 and 6, a movable focusing member 33 is guided for movement along the optical axis the upper guide bar 27 and the lower guide bar 28. The movable focusing member 33 holds a focusing lens 34 fixedly.

As shown in Fig. 3, a partition wall 36 is disposed fixedly at a middle position with respect to a longitudinal direction between the movable zooming member 31 and the movable focusing member 33 in the case 20. A middle barrel 37 is formed integrally with the partition wall 36 so as to protrude forward. Fixed middle lenses 38 are held fixedly on the middle barrel 37. As shown in fig. 1, an iris 39, namely, an aperture stop, is inserted in a space between the fixed middle lenses 38.

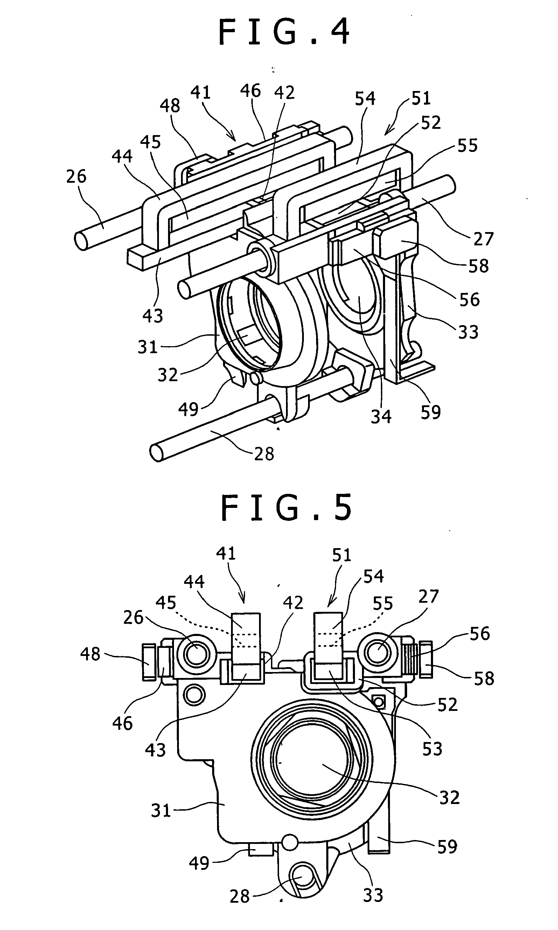

A zooming linear motor 41 for moving the movable zooming member 31 will be described. Referring to Figs. 4 and 5, the zooming linear motor 41 has a coil 42 having a shape resembling a rectangular tube. The coil 42 is attached to the movable zooming member 31 and is mounted for sliding on a guide core 43 substantially parallel to the upper guide bar 26. A substantially U-shaped yoke 44 is mounted on the guide core 43 with the opposite ends thereof attached to the guide core 43. A magnet 45 is attached to the lower surface of the yoke 44 . The magnetic flux of the magnet 45 penetrates the guide core 43. Magnetic lines of force representing a magnetic field created by the magnet 45 extend through the yoke 44 and the guide core 43 to form a magnetic circuit.

A position indicating magnet 46 is attached to the movable zooming member 31 fixedly holding the coil 42. A magnetoresistive element 48 attached to a support plate 47 as shown in Fig. 2 detects the position indicating magnet 46. Power is fed to the coil 42 through a flexible printed cable 49 attached to the back surface, facing an image pickup device 61, of the movable zooming member 31. As shown in Figs. 1 and 2, the yoke 44 is fitted in a slot 50 formed in the upper wall of the case 20.

A focusing linear motor 51 for moving the movable focusing member 33 holding the focusing lens 34 will be described with reference to Figs. 3, 4, 5 and 6. The focusing linear motor 51 has a coil 52 having a shape resembling a rectangular tube. The coil 52 is guided for sliding movement by a guide core 53 parallel to the upper guide bar 27. A substantially U-shaped yoke 54 is mounted on the guide core 53. As shown in Figs. 1 and 2, the yoke 54 is held in a slot 60 formed in the upper wall of the case 20. A bar magnet 55 is attached to the lower surface of the yoke 54.

A position indicating magnet 56 is attached to a side surface, to which the coil 52 is attached, of the movable focusing member 33. A magnetoresistive element 58 attached to the inner surface of a support plate 57 as shown in Fig. 1 detects the position indicating magnet 56. Power is fed to the coil 52 through a flexible printed cable 59 attached to a side surface, on the side of the objective lens 23, of the movable focusing member 33.

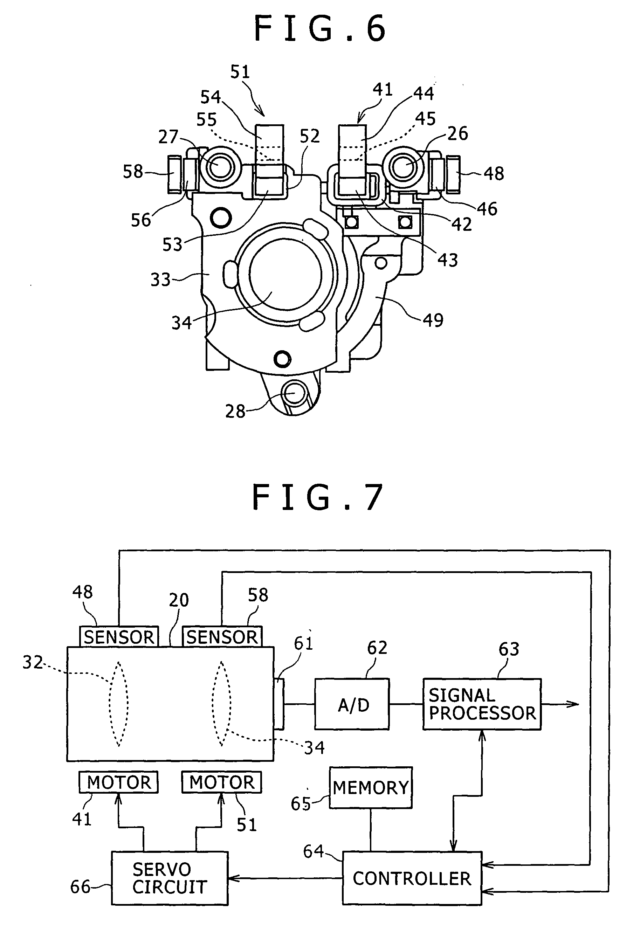

An image forming unit included in an optical system provided with the compound lens is provided with an image pickup device 61. The image pickup device 61 converts an optical image into electric image signals. The image pickup device 61 is, for example, a CCD. Image signals provided by the image pickup device 61 is converted into corresponding digital image signals by an A/D converter 62 shown in Fig. 7. A signal processor 63 processes the digital image signals to provide proper image signals. The image signals provided by the signal processor 63 are sent to an image pickup unit. If the image pickup unit is a video camera provided with a video signal recording device, the image signals received from the signal processor 63 are stored in the video signal recording device.

The signal processor 63 is provided with a detecting circuit capable of detecting specific components of the image signals, such as luminance components in a high region. A detection signal provided by the detecting circuit is given to a controller 64 for controlling the image pickup operation of the image pickup device. The controller 64 determines a focusing condition, namely, a condition of focus, on the basis of the level of the detection signal and executes an automatic focus control operation to bring an object into focus.

In the automatic focus control operation, the controller 64 executes a servo control process to make a servo circuit 66 generate a drive signal for driving the focusing linear motor 51 to move the focusing lens 34. The drive signal is given to the focusing linear motor 51. Then, the focusing linear motor 51 drives the movable focusing member 33 to adjust the position of the focusing lens 34 for focusing.

When a zooming key is operated, a zooming signal is given to the controller 64. The controller 64 operates on the basis of the zooming signal to give desired position information about a desired position of the zooming lens 32 to the servo circuit 66. Then, the servo circuit 66 generates a drive signal for driving the zooming linear motor 41, and the zooming linear motor 41 moves the movable zooming member 31 to place the zooming lens 32 at the desired position for framing.

The moving speed of the movable zooming member 31 holding the zooming lens 32 can be varied by varying zooming key operating mode. When the zooming linear motor 41 is driven to move the movable zoomingmember 31 at the highest moving speed, the zooming lens 32 can be moved from a position corresponding to the shortest focal length for the widest angle of view to a position corresponding to the longest focal length for the narrowest angle of view in, for example, a very short time less than 1 s.

Even if the position of the object relative to the camera is not changed, the focusing lens 34 is not in exact focus unless the position of the focusing lens 34 is changed according to the focal length when the image frame and hence the focal length is changed. Necessary information about the relation between focal length and the position of the focusing lens 34 in exact focus is stored beforehand in a storage device 65 connected to the controller 64. When the focal length is changed, the controller 64 reads the information from the storage device 65, gives a control signal specifying a focusing control operation to the servo circuit 66 to adjust the position of the focusing lens 34.

The focusing linear motor 51 is capable of driving the movable focusing member 33 holding the focusing lens 34 for movement at a very high moving speed. When the zooming lens 32 is moved at a high moving speed, the position of the focusing lens 34 is corrected according to the movement of the zooming lens 32. Thus the position of the focusing lens 34 can be corrected to keep the focusing lens 34 in exact focus by a rapid position correcting operation.

A compound lens assembling method of assembling the compound lenses, such as the objective lens 23, the zooming lens 32, the focusing lens 34 and the fixed middle lens 38, will be described. Each of those lenses 23, 32, 34 and 38 are compound lens formed by assembling a plurality of single lenses and having improved optical characteristics. The lenses of the compound lens need to be arranged at predetermined axial intervals with their optical axis correctly aligned with each other. A compound lens assembling method will be described as applied to assembling the fixed middle lens 38 by way of example.

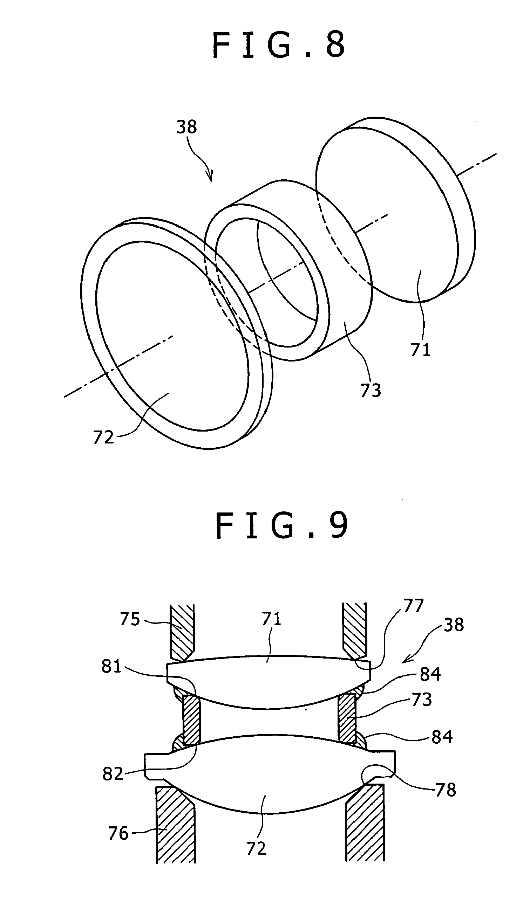

Referring to Fig. 8, the fixed middle lens 38 includes a back lens 71, namely, an upper lens as viewed in Fig. 8, a front lens 72, namely, a lower lens as viewed in Fig. 8, and a spacer 73 spacing the back lens 71 and the front lens 72 from each other. The lenses 71 and 72 are fixed with their surfaces facing each other in contact with the opposite end surfaces of the spacer 73, respectively.

A bell chucking mechanism having an upper chucking unit 75 and a lower chucking unit 76 as shown in Fig. 9 is used for assembling the lenses 71 and 72 and the spacer 73. The respective center axes of the upper chucking unit 75 and the lower chucking unit 76 are aligned with each other. At least either of the upper chucking unit 75 and the lower chucking unit 76 is axially movable relative to the other with its center axis aligned with that of the other. The chucking units 75 and 76 can be moved toward each other for a pressing operation.

The back lens 71 is seated on the spacer 73 with its curved surface in contact with a contact part 81 of the spacer 73. The front lens 72 is in contact with the other contact part 82 of the spacer 73. The chucking units 75 and 76 apply axial pressures to the lenses 71 and 72. Consequently, the respective optical axes of the lenses 71 and 72 and the spacer 73 are aligned automatically with each other.

When the chucking units 75 and 76 apply the axial pressures to the lenses 71 and 72 having curved surfaces symmetrical with respect to an axis, the lenses 71 and 72 are in the most dynamically stable state and at the axially shortest distance from each other as shown in Fig. 9 when the respective optical axes of the lenses 71 and 72 and the spacer 73 are aligned with each other. Thus the lenses 71 and 72 and the spacer 73 can be automatically aligned by applying pressures to the lenses 71 and 72 by the chucking units 75 and 76.

The contact part 78 of the lower chucking unit 76 comes into contact with the front curved surface of the front lens 72 such that the center axis of the lower chucking unit 76 is aligned with the optical axis of the front lens 72. The back curved surface of the front lens 72 is in stable contact with the contact part 82 of the spacer 73 such that the optical axis of the front lens 72 is aligned with the center axis of the spacer 73. The upper chucking unit 75 presses the back lens 71 seated on the spacer 73 against the spacer 73. Consequently, the curved front surface of the back lens 71 comes into close contact with the contact part 81 of the spacer 73 with the respective center axes of the spacer 73 and the upper chucking unit 75 and the optical axis of the back lens 71 aligned with each other.

Thus the lenses 71 and 72 and the spacer 73 are combined stably with the respective optical axes of the lenses 71 and 72 and the center axis of the spacer 73 aligned with the respective center axes of the chucking units 75 and 76. The lenses 71 and 72 and the spacer 73 thus combined are fixedly joined together with an adhesive 84.

The chucking mechanism having the centered chucking units 75 and 76 capable of being moved parallel to the optical axes of the lenses 71 and 72 clamps the lenses 71 and 72 with the spacer 73 held between the lenses 71 and 72. The lenses 71 and 72 are bonded to the spacer 73 with an adhesive or are fastened to the spacer 73 by staking. When the lenses 71 and 72 are thus fastened to the spacer 73, the tilt of the optical axes of the lenses 71 and 72 is corrected. The surfaces of each of the lenses 71 and 72 may be any one of combinations of curved surfaces.

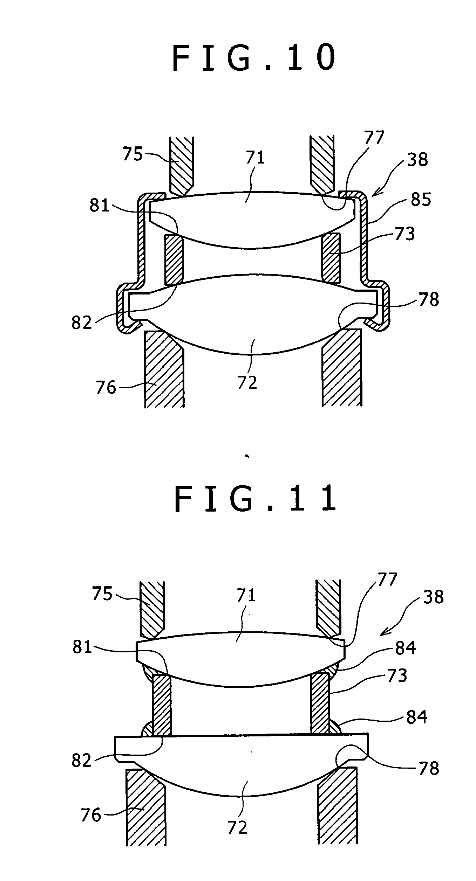

The lenses 71 and 72 of the fixed middle lens 38 shown in Fig. 9 are bonded to the spacer 73 with the adhesive 84. The adhesive 84 may be, for example, an ultraviolet curable adhesive that hardens when irradiated by ultraviolet rays. The combination of the lenses 71 and 72 and the spacer 73 may be fixedly clamped together by an annular clamping spring 85 as shown in Fig. 10.

In assembling a fixed middle lens 38 shown in Fig. 11, a front lens 72, a lower lens as viewed in Fig. 11, is put on a lower chucking unit 76 with the curved front surface thereof in contact with the contact part of the chucking unit 76, a spacer 73 is placed on the flat back surface of the front lens 72 with its contact part 82 in contact with the back surface of the front lens 72, a back lens 71, namely, an upper lens as viewed in Fig. 11, is put on the spacer with the curved front surface thereof in contact with a contact part 81 of the spacer 73, and an upper chucking unit 75 is pressed against the back surface of the back lens 71 to compress the assembly of the front lens 72, the spacer 73 and the back lens 71 between the chucking units 75 and 76. Thus the lenses 71 and 72 are held in contact with the spacer 73 in two contact planes containing the contact parts 81 and 82 of the spacer 73 and perpendicular to the optical axis.

When the assembly of the front lens 72, the spacer 73 and the back lens 71 are compressed between the chucking units 75 and 76, the positions of the contact planes are adjusted automatically so as to be perpendicular to the center axes of the chucking units 75 and 76 and the optical axes of the lenses 71 and 72 on the principle of a bell chuck. After the lenses 71 and 72 and the spacer 73 have been thus aligned with each other, the lenses 71 and 72 are fixedly bonded to the spacer 73 with an adhesive 84. The surfaces of the lenses 71 and 72 and the contact surfaces of the chucking units 75 and 76 to be brought into contact with the lenses 71 and 72 may be any suitable curved surfaces.

A structure shown in Fig. 12 will be described. A front lens 72 is put on a chucking unit 76 with its curved front surface in contact with the contact part 78 of the chucking unit 76, a spacer 73 is put on the front lens 72 with its front contact part 82 in contact with the back surface of the front lens 72, a back lens 71 is put on the spacer 73 with its front surface in contact with the back contact part 81 of the spacer 73, and the lower end of a chucking unit 75 is brought into contact with the back surface of the back lens 71.

The chucking mechanism including the chucking units 75 and 76 and the lenses 71 and 72 are in contact at least in two contact planes perpendicular to the optical axis. The contact planes contain the contact part 77 of the upper chucking unit 75 in contact with the back lens 71, and the contact part 78 of the lower chucking unit 76 in contact with the front lens 72, respectively. The lenses 71 and 72 are bonded to the spacer 73 in a state where the two contact planes are perpendicular to the optical axis. The surfaces of each of the lenses 71 and 72 excluding the flat contact parts may be any one of combinations of curved surfaces. The lenses 71 and 72 and the spacer 73 may be fixedly joined together by a holding spring 85 similar to that shown in Fig. 10.

The automatic centering method using the chucking mechanism including the chucking units 75 and 76 can fixedly join together the lenses 71 and 72 and the spacer 73 in accurate alignment without performing optical centering using adjusting screws. The assembly of the lenses 71 and 72 and the spacer 73 is mounted on a lens barrel. Thus the lens barrel does not need to be provided with any lens adjusting mechanism and hence can be formed in a small size. Elimination of adjusting parts reduces component parts, assembling man-hours and adjusting man-hours. Accurate assembly of the compound lenses simplifies tools and jigs needed by a lens assembling process and facilitates assembling work.

Although the invention has been described in its preferred embodiments, the present invention is not limited thereto in its practical application and many changes and variations are possible therein without departing from the scope and spirit thereof. Although the invention has been described as applied to the fixed middle lens of the lens system for a video camera, the present invention is applicable to compound lenses of other lens systems. The combination of the positions of the curved surfaces of the plurality of lenses and the chucking units and the spacer may be optionally changed within the technical scope of the present invention.

It should be understood by those skilled in the art that various modifications, combinations, sub-combinations and alterations may occur depending on design requirements and other factors insofar as they are within the scope of the appended claims or the equivalents thereof.

## Claims

1. A compound lens assembling method of assembling a plurality of single lenses of a compound lens such that optical axes of the single lenses are aligned with each other, said compound lens assembling method comprising the steps of:
pressing the single lenses disposed respectively on the opposite sides of a cylindrical spacer against the spacer by a pair of chucking units having center axes aligned with each other and capable of moving in directions parallel to the optical axes of the single lenses; and
fixing the single lenses to the spacer by a fixing means with the curved surfaces of the single lenses on the opposite sides of the spacer in contact with contact surfaces of the chucking units and the spacer contained in planes perpendicular to the optical axis, respectively, and with the single lenses and the spacer automatically centered.

2. A compound lens assembling method according to claim 1, wherein at least one of the single lenses is automatically centered relative to one of the chucking units with a curved surface thereof in contact with contact surface of the corresponding chucking unit.

3. A compound lens assembling method according to claim 1 or 2, wherein at least one of the single lenses is automatically centered relative to the spacer with a curved surface thereof in contact with a contact surface of the spacer.

4. A compound lens assembling method according to claim 1, 2 or 3, wherein contact parts of the single lenses in contact with the spacer are contained in flat planes perpendicular to the optical axis, respectively.

5. A compound lens assembling method according to claim 1, 2, 3 or 4, wherein contact parts of the single lenses in contact with the chucking units are contained in flat planes perpendicular to the optical axis.

6. A compound lens assembling method according to any one of the preceding claims, wherein the fixing means is at least one of adhesive bonding, staking, an annular holding spring or fixing member of a heat shrinkable polymer.

7. A compound lens assembled by the compound lens assembling method according to any one of claims 1 to 6.

8. A camera including a compound lens according to claim 7.
